# EUROPEAN PATENT APPLICATION

(11) **EP 1 099 802 A2**
(43) Date of publication of application: **16.05.2001**
(21) Application number: 00650188.6
(22) Date of filing: 09.11.2000
(51) Int. Cl.: E02F 9/20, E02F 9/26

(54) **Position and orientation sensor for construction equipment**

(30) Priority: 09.11.1999 US 164261 P
(71) Applicant: LASER ALIGNMENT, INC., Grand Rapids Michigan 49506 (US)
(72) Inventor: Savard, Hassel J., Grand Rapids, Michigan 49546 (US)
(74) Representative: Boyce, Conor

(57) **Abstract**

A construction apparatus including a base, a member supported by the base through an articulated support and a control is disclosed. The control monitors the orientation and/or position of the member. The control includes a fiber-optic sensor producing a signal proportional to curvature or displacement of a fiber-optic bundle.

This allows the monitoring of the member, which may be a construction implement, such as an excavator bucket, a grader blade, or the like. For example, a control unit in the cab, or the like, may monitor the member without the requirement for supplying electrical energy to the member itself. The output of the control is a signal proportional to the measured position and/or orientation of the member without the necessity for combining the outputs of numerous sensors and integrating the resultant signal. Furthermore, the control is substantially immune to electromagnetic interference and other environmental degradation at the job site and can be used to field-upgrade existing equipment.

## Description

### BACKGROUND OF THE INVENTION

This invention relates generally to construction equipment and, more particularly, to control systems for monitoring the position of construction equipment members and, optionally, controlling such members in a closed loop control. The invention is applicable to excavators, graders, trenchers, and the like.

In order to control a member of a construction implement, such as the bucket teeth of an excavator, it is necessary to monitor the position of the member. By knowing the position of the member, a feedback control system can be established in order to drive the member to a desired position, such as disclosed in commonly assigned United States Patent 4,829,418, the disclosure of which is hereby incorporated herein by reference. Monitoring the position of the member has proven difficult. Often the member is located at the end of a series of articulated members, such as the bucket on an excavator is rotatably connected to a stick which is rotatably connected to a boom which is rotatably connected to a frame or cab member. The frame or cab member is rotatably connected to a propulsion unit, such as a set of caterpillars defining a crawler. In order to monitor the position of the bucket teeth, it has traditionally been necessary to monitor each of the articulated members supporting the bucket, as well as the orientation of the bucket itself. Each of the members is monitored by some form of transducer, such as a rotary encoder, verticality sensor, or the like. Each sensor output is wired back to a control position centrally, such as at the frame member. A control processes the outputs of the various sensors and produces a value representative of the position of the bucket teeth at any one time.

The difficulty with such known solutions are numerous. Each of the sensors must be supplied with electrical power and an output fed back to a central control. This requires extensive wiring, as well as the necessity for proper positioning and calibrating of each sensor. Each of the sensors is subject to physical damage as well as various forms of interference, such as electromagnetic interference. In order to determine the position of the monitored member, it is first necessary to read and combine the outputs of numerous sensors. The sensors often need to be integrated in order to arrive at the desired parameter. All of this increases the complexity of the apparatus for assembling and operating. Furthermore, the results are not always satisfactory in the field.

### SUMMARY OF THE INVENTION

The present invention is directed to a construction apparatus including a base, a member supported by the base through an articulated support and a control. The control monitors the orientation and/or position of the member. The control includes a fiber-optic sensor producing a signal proportional to curvature or displacement of a fiber-optic bundle.

The invention advantageously allows the monitoring of the member, which may be a construction implement, such as an excavator bucket, a grader blade, or the like, while avoiding many of the problems of the prior art. For example, a control unit in the cab, or the like, may monitor the member without the requirement for supplying electrical energy to the member itself.

The output of the control is a signal proportional to the measured position and/or orientation of the member without the necessity for combining the outputs of numerous sensors and integrating the resultant signal. Furthermore, the control is substantially immune to electromagnetic interference and other environmental degradation at the job site and can be used to field-upgrade existing equipment.

These and other objects, advantages and features of this invention will become apparent upon review of the following specification in conjunction with the drawings.

### BRIEF DESCRIPTION OF THE DRAWINGS

Fig. 1 is a side elevation of an excavator, according to the invention;
Fig. 2 is a side elevation of a trencher, according to the invention;
Fig. 3 is a perspective view of a grader, according to the invention;
Fig. 4 is a perspective view of a blade assembly of the grader in Fig. 3;
Fig. 5 is a side elevation of a fiber-optic sensor useful with the invention;
Fig. 6 is a sectional view of the sensor in Fig. 5;
Fig. 7 is the same view as Fig. 6 of an alternative embodiment thereof; and
Fig. 8 is a perspective view of a sensor showing a surface configuration thereof.

### DESCRIPTION OF THE PREFERRED EMBODIMENT

Referring now specifically to the drawings, and the illustrative embodiments depicted therein, a construction apparatus in the form of an excavator 10 includes a base 12 and a construction implement in the form of a bucket 14 having digging teeth 16. Bucket 14 is connected with base 12 through an articulated support in the form of a boom 18 pivotally connected with base 12 at a pivot 20 and a stick 22 pivotally connected with boom 18 at a pivot 24. Bucket 14 is pivotally connected with stick 22 at pivot 26. A control 28 monitors the position and/or orientation of bucket 14. Control 28 includes a fiber-optic bundle 30 extending from an electronic control assembly 32 positioned at base 12 and extending to bucket 14. Control 28 produces a parameter as monitored by electronic control 32 that directly represents the position and/or orientation of bucket 14. Fiber-optic bundle 30, which may be positioned within a flexible conduit, such as plastic conduit, aluminum conduit, steel conduit, or the like, may be registered with pivots 20, 24 and 26 by registration members R located at the excavator, and corresponding registration members are on the fiber-optic bundle 30. This provides precise positioning between the fiber-optic bundle and each pivot 20, 24 and 26. In the illustrative embodiment, excavator 10 includes a crawler, or a caterpillar, 34 that pivotally supports base 12 at a joint 36. Another control 28 could be positioned between crawler 34 and base 12 in order to monitor rotation of joint 36. This provides complete position information of bucket 14 in three degrees of freedom: vertical, horizontal and lateral. In some forms of excavators, boom 18 is pivotally mounted to pivot laterally with respect to the base. In such circumstances, it would be possible for control 28 to directly monitor the position of bucket 14 in three degrees of freedom.

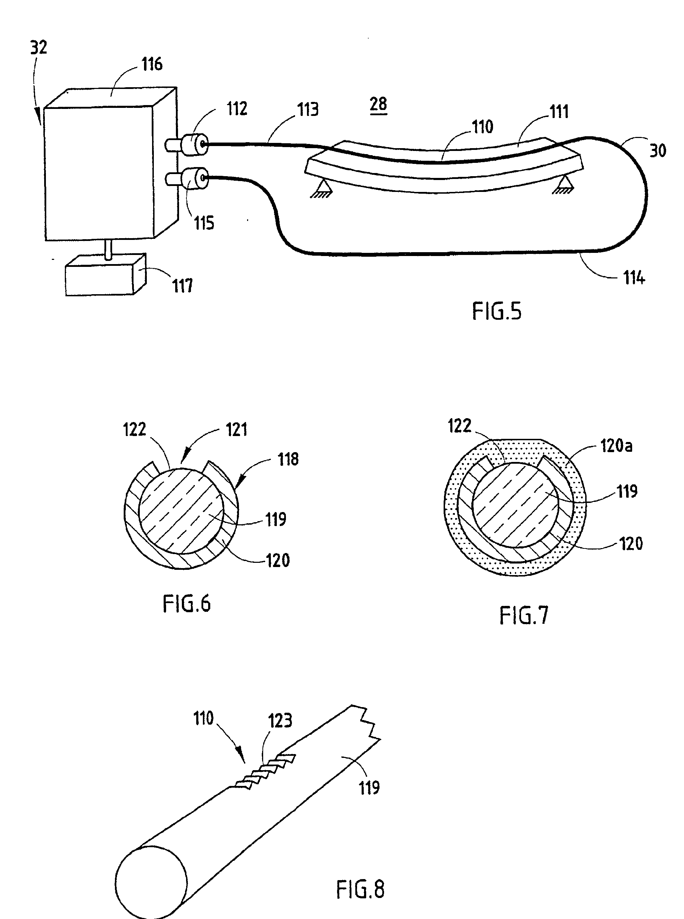

Control 28 preferably is SHAPE TAPE™ marketed by Measurand, Inc. of Fredericton, NB, Canada. Such units are capable of measuring one degree of freedom, two degrees of freedom or six degrees of freedom. In the illustrated embodiment, a six-degree of freedom unit is utilized. However, a two degree of freedom unit may suffice. Control 28 is preferably manufactured according to United States Patents 5,321,257 issued to L.A. Danisch, the disclosures of which are hereby incorporated herein by reference, and will not be repeated herein in detail. Suffice it to say, a bending sensor 110 is illustrated mounted to a member 111 that is capable of bending (fig 5). Light is conveyed from a photo-emitter 112 through a plastic or other optical fiber light guide 13 to the sensor portion 110, and thence through guide 114 to a photo-detector 115. The light guide near the sensor region 110 has had its outer protective jacket removed, and the light conducting core exposed along a strip on the surface; portions 113 and 114 leading to the sensor region may have the jacket in place. The sensing portion 110 is adapted to sense bending. The photo-emitter 112 and photo-detector 115 are part of an electronic measuring system 116 and display 117, which includes means for measuring the difference in intensity of the light beam between the photo-emitter 112 and the photo-detector 115.

Fig 6 illustrates, in cross-section, a conventional optical fiber waveguide 118 having a light-conducting fiber 119 and a cladding 120. Normally there will be a buffer layer and a coating layer also. The cladding is removed locally, at 121, extending in a band along the fiber 119, to form a light emitting surface 122. The band can be formed by deliberately removing cladding as by abrasion, melting, or the like, or by displacement as by pressure or rubbing on the fiber, for example by a heated tool, depending upon the particular form of fiber. Figure 7 illustrates a modification of the arrangement of Fig 6 in which the light emitting surface band 121 is covered with a light absorbent material 120a. Typical materials for the coating 120a are graphite filled epoxy resin, dye-filled resins and similar materials. The use of the coating 120a prevents emitted light interfering with any other instrument or structure and also prevents any back reflection into the fiber, which could affect the measurements. The additional coating 120a can be applied only over the band 121, but more commonly is applied around the entire fiber. Fig 8 illustrates one example of a fiber 119 with the emitting surface textured. Serrations 123 have been created on one side of the fiber, as by pressing it onto the surface with a file. Similar serrations can be created by heat forming and molding. Both plastic and glass optical fibers can be so formed. Heat forming can be accomplished by pressing the fiber slightly onto a heated metal surface which can be serrated, corrugated, or otherwise formed. The angle of the serrations can vary. It is not necessary to first remove the cladding of the fiber as this will be displace. After treatment, a sensor portion emits some light along the length while transmitting a portion of any light within it to either end. The skilled artisan will recognize that multiple fibers can be used to form a sensing system capable of detecting a multiple-dimensional vector describing the applied bend. The sensing portions would be arranged so that the axes of maximum sensitivity are at 120 degrees to each other, for example.

Fiber-optic bundle 30 may be one unit spanning base 12, boom 18, stick 22 and bucket 14. Alternatively, individual fiber-optic bundles may be used to measure position and/or orientation at each pivot 20, 24 and 26. Other arrangements will suggest themselves to the skilled artisan. Excavator 10 may be of the type generally disclosed in commonly assigned Patent 4,829,418, the disclosure of which is hereby incorporated herein by reference. In particular, the particular laser calibration technique disclosed in the '418 patent may be utilized to calibrate the control system 28 in excavator 10. Alternatively, the control system 28 could be calibrated by having the operator position bucket 14 at a particular location, such as a grade stake, and actuating a calibration button. Other techniques known in the art may be utilized, such as positioning a laser receiver (not shown) in a laser beam and actuating a calibration button.

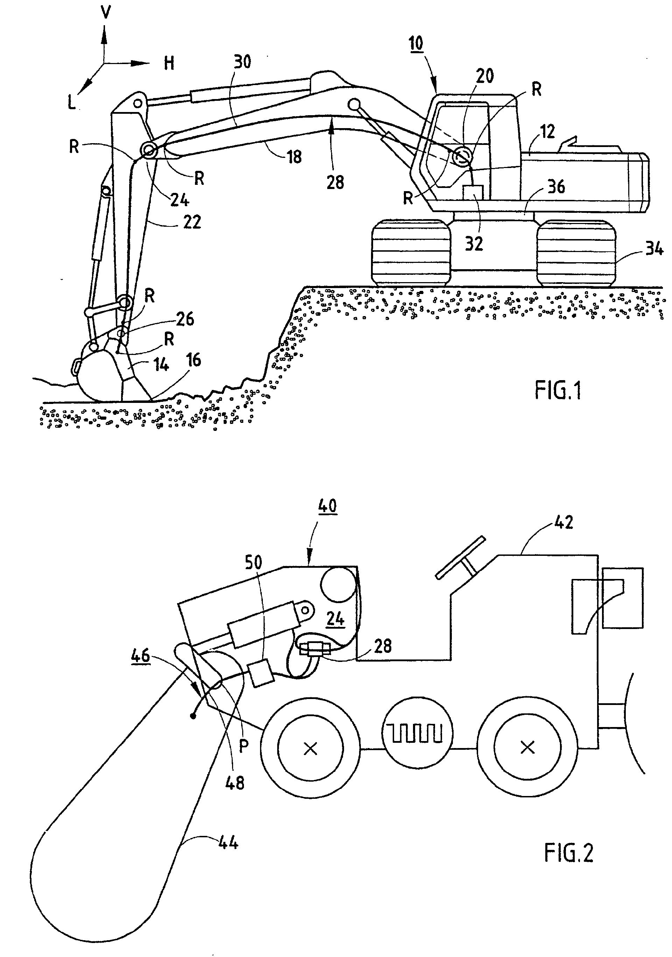

Another construction apparatus in the form of a trencher 40 includes a frame 42 and a trenching tool 44 (Fig. 2). A control assembly 46 is shown to include a fiber-optic bundle 48 extending from an electronic control module 50 positioned on frame 42 to a location on trencher tool 44. This allows trencher tool 44, which pivots with respect to frame 42, to be monitored in its angular orientation with respect to the frame. Trencher 40 may, otherwise, be of the type disclosed in commonly assigned United States Patent 5,559,725, the disclosure of which is hereby incorporated herein by reference.

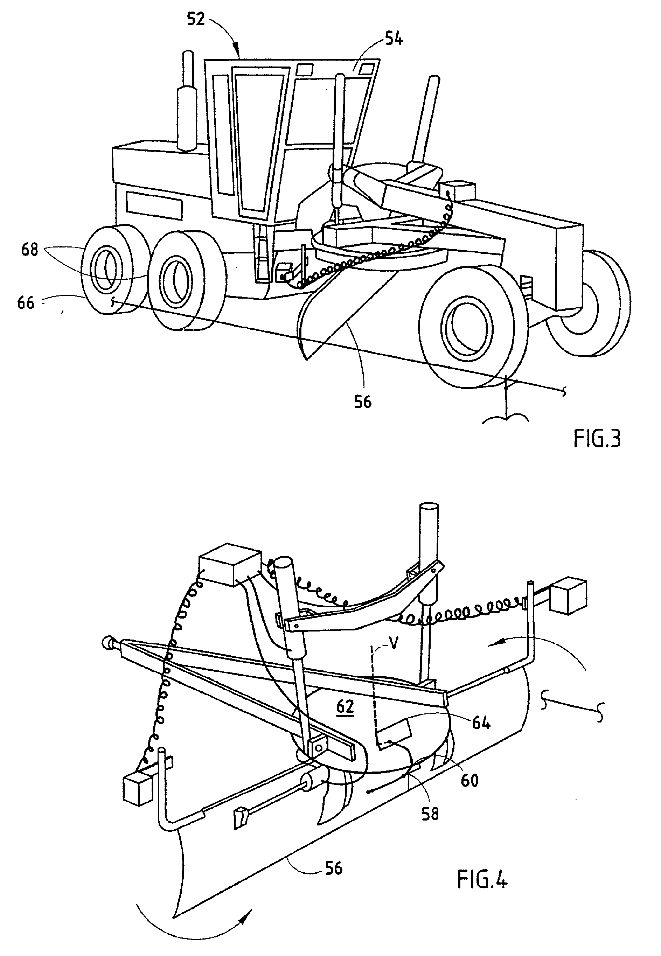

Another construction apparatus comprises a grader 52, including a frame 54 and a construction implement in the form of a blade 56 (Fig. 3). Blade 56 is rotationally positionable about a vertical axis V (Fig. 4). A control 58 includes a fiber-optic bundle 60 extending from blade 56 to a stationary platform 62. An electronic control module 64 monitors the position of blade 56 with respect to platform 62 about vertical axis V.

Grader 52 additionally includes a bogie 66, which mounts drive wheels 68. Bogie 66 provides limited pivotal motion about a vertical axis (not shown) with respect to grader frame 54. During operation, bogie 66 pivots about its vertical axis in order to accommodate movement of the grader 52 as it traverses the surface to be graded. As grader 52 moves, the bogie seeks an accommodating position. This may result in the grader "crabbing" when the bogie is not aligned with the front wheels of the grader. A control system, according to the invention, could be used to monitor bogie 66 and provide information to a master control for grader 52 that would take into account the degree of crabbing of the bogie, the details of which would be understood by the skilled artisan.

Other applications in the construction field for control systems utilizing fiber-optic bundles would suggest themselves to the skilled artisan. For example, elevations could be measured and utilized by applying the fiber-optic bundle to a sensor elevated to the desired level and observing a readout. The invention may also find application with other construction apparatus, such as concrete screeds, pavers, demolition apparatus, such as disclosed in commonly assigned Patent 5,711,022, the disclosure of which is hereby incorporated herein by reference, and the like.

Changes and modifications in the specifically described embodiments can be carried out without departing from the principles of the invention which is intended to be limited only by the scope of the appended claims, as interpreted according to the principles of patent law including the doctrine of equivalents.

## Claims

1. A construction apparatus, comprising:
a base;
a member supported by said base through an articulated support; and
a control monitoring at least one of orientation and position of said member, said control comprising a fiber-optic sensor producing a signal proportional to curvature or displacement of a fiber-optic bundle.

2. The construction apparatus in claim 1 wherein said base comprises a grader frame, said member comprises a wheel bogie and said articulated support comprises a rotary support of said wheel bogie and wherein said fiber-optic bundle engages said rotary support.

3. The construction apparatus in claim 1 wherein said base comprises a trencher frame, said member comprises a trenching tool and said articulated support comprises a pivotal support of said trenching tool at said trencher frame and wherein said fiber-optic bundle extends to said trenching tool.

4. The construction apparatus according to Claim 1 wherein said member comprises construction implement.

5. The construction apparatus in claim 1 or 4 wherein said base comprises an excavator base, said member comprises a bucket and said articulated support comprises a boom pivotally connected with said base at a first pivot joint and a stick pivotally connected with said boom at a second pivot joint, wherein said bucket is pivotally connected with said stick at a third pivot joint.

6. The construction apparatus in claim 5 wherein said fiber-optic bundle extends to said bucket.

7. The construction apparatus in claim 5 wherein said fiber-optic bundle comprises registration members adapted to join registration members at at least one of said pivot joints to position said fiber-optic bundle at that one of said pivot joints.

8. The construction apparatus in claim 1 or 4 wherein said fiber-optic bundle in encased in a flexible conduit.

9. The construction apparatus in claim 1 or 4 wherein said base comprises a grader frame, said member comprises a blade and said articulated support comprises a rotary support of said blade and wherein said fiber-optic bundle extends to said rotary support.

10. The construction apparatus in claim 4 wherein said base comprises a trencher frame, said implement comprises a trenching tool and said articulated support comprises a rotary support of said trenching tool at said trencher frame and wherein said fiber-optic bundle extends to said rotary support.

11. The construction apparatus in claim 1 or 4 including a linear actuator moving said member with respect to said frame, and wherein said fiber-optic bundle monitors movement of said linear actuator.

12. The construction apparatus in claim 11 wherein said linear actuator includes a housing and said fiber-optic bundle is inside said housing.

13. The construction apparatus in claim 1 or 4 wherein said member is capable of movement in at least three degrees of freedom and wherein said control monitors movement in at least three degrees of freedom.

14. A method of monitoring a member of a construction apparatus, comprising:
providing a fiber-optic sensor producing a signal proportional to curvature or displacement of a fiber-optic bundle and positioning said fiber-optic sensor at said member.

15. The method of monitoring a member of a construction apparatus in claim 14 including providing an excavator base, a bucket, a boom pivotally connected with said base at a first pivot joint and a stick pivotally connected with said boom at a second pivot joint, wherein said bucket is pivotally connected with said stick at a third pivot joint, and further including extending said fiber-optic sensor to said bucket.

16. The method of monitoring a member of a construction apparatus in claim 15 including extending said fiber-optic bundle to each of said pivot joints.

17. The method of monitoring a member of a construction apparatus in claim 16 including positioning said fiber-optic bundle by providing registration members on said fiber-optic bundle adapted to join registration members at at least one of said pivot joints.

18. The method of monitoring a member of a construction apparatus in claim 15 including providing a grader frame, a blade, and a rotary support supporting said blade and further including positioning said fiber-optic sensor at said rotary support.

19. The method of monitoring a member of a construction apparatus in claim 15 including providing a linear actuator moving said member with respect to said frame, and monitoring movement of said linear actuator with said fiber-optic bundle.

20. The method of monitoring a member of a construction apparatus in claim 15 including providing a grader frame, a wheel bogie and a rotary support of said wheel bogie and extending said fiber-optic bundle to said rotary support.
